# EUROPÄISCHE PATENTSCHRIFT

(11) **EP 1 960 131 B1**
(45) Veröffentlichungstag und Bekanntmachung des Hinweises auf die Patenterteilung: **11.03.2009**
(21) Anmeldenummer: 06829382.8
(22) Anmeldetag: 07.12.2006
(51) Int. Cl.: B21B 1/46

(54) **VERFAHREN UND VORRICHTUNG ZUM HERSTELLEN EINES METALLBANDES DURCH GIESSWALZEN**
METHOD AND DEVICE FOR PRODUCING A METAL STRIP BY CONTINUOUS CASTING AND ROLLING
PROCEDE ET DISPOSITIF POUR PRODUIRE DES BANDES METALLIQUES PAR COULEE CONTINUE ET LAMINAGE

(30) Priorität: 16.12.2005 DE 102005060764; 06.03.2006 DE 102006010137; 22.11.2006 DE 102006054932
(43) Veröffentlichungstag der Anmeldung: 27.08.2008
(73) Patentinhaber: SMS Demag Aktiengesellschaft, 40237 Düsseldorf (DE)
(72) Erfinder: ROSENTHAL, Dieter, 57572 Niederfischbach (DE); KRÄMER, Stephan, 57271 Hilchenbach (DE); SEIDEL, Jürgen, 57223 Kreuztal (DE); BENFER, Frank, 57334 Bad Laasphe (DE)
(74) Vertreter: Klüppel, Walter
(86) Internationale Anmeldenummer: PCT/EP2006/011762
(87) Internationale Veröffentlichungsnummer: WO 2007/073841

(56) Entgegenhaltungen:
- EP-A1- 0 625 383
- EP-A2- 0 610 028
- DE-A1- 19 518 144
- FR-A1- 2 656 553

## Beschreibung

Die Erfindung betrifft ein Verfahren zum Herstellen eines Metallbandes durch Gießwalzen, bei dem zunächst in einer Gießmaschine eine Dünnbramme gegossen wird, wobei diese anschließend in mindestens einer Walzstraße unter Nutzung der Primärhitze des Gießvorgangs gewalzt wird. Des weiteren betrifft die Erfindung eine Vorrichtung zum Herstellen eines Metallbandes durch Gießwalzen. Dokument EP-A 0610028 offenbart ein gattungsgemäßes Verfahren sowie eine gattungsgemäße Vorrichtung. Anlagen dieser Art sind als Dünnbrammen-Dünnband-Gießwalzanlagen unter der Bezeichnung CSP-Anlagen bekannt.

Das Endloswalzen aus der Gießhitze heraus ist seit langem bekannt, es hat sich jedoch noch nicht am Markt durchgesetzt. Die starre Verbindung von Stranggussanlage und Walzstraße sowie die Temperaturführung durch die Gesamtanlage haben sich als schwer beherrschbar erwiesen.

Aus der EP 0 286 862 A1 und aus der EP 0 771 596 B1 ist das Endloswalzen aus der Gießhitze heraus bekannt. Hier sind der Gieß- und der Walzprozess direkt gekoppelt. Ein Trennen des Endlosbandes mit einer Schere erfolgt kurz vor dem Haspel.

Ähnliche Verfahren für das kontinuierliche Herstellen von Bandstahl bei der Kopplung von Gieß- und Walzanlage offenbaren die EP 0 415 987 B2 und die EP 0 889 762. B1. Zum Überwinden der Temperaturprobleme bei der relativ niedrigen Transportgeschwindigkeit sind dort induktive Heizungen vor und innerhalb der Walzstraße vorgesehen.

Eine alternative Technologie hierzu ist das Walzen von Einzelbrammen bzw. Einzelbändern. Bei dem diskontinuierlichen Walzen von Bändern werden das Gießen und Walzen entkoppelt. Die Gießgeschwindigkeit ist in der Regel sehr niedrig und die Walzgeschwindigkeit erfolgt unabhängig davon auf hohem Niveau in der Art, dass die Temperatur für die letzte Umformung oberhalb der Mindesttemperatur liegt. Derartige Anlagen, die auch als CSP-Anlagen bezeichnet werden, sind beispielsweise in der EP 0 266 564 B1 beschrieben, wo eine Hochumformung in der Dünnbrammenanlage durchgeführt wird.

Eine ähnliche Dünnbrammenanlage zeigt auch die EP 0 666 122 A1, wo diskontinuierlich Bänder unter Verwendung von induktiver Erwärmung zwischen den ersten Fertiggerüsten gewalzt werden.

Die Vorteile des diskontinuierlichen Walzens sind, dass die Gieß- und die Walzgeschwindigkeit unabhängig voneinander eingestellt werden können. Bei Dünnbandwalzung lassen sich z. B. flexibel höhere Walzgeschwindigkeiten einstellen, auch wenn die Gießanlage mit niedriger Geschwindigkeit arbeitet oder die Geschwindigkeit dort gerade verändert wird.

Beide Verfahren - also auf der einen Seite das kontinuierliche Gießwalzen und auf der anderen Seite das diskontinuierliche Gießwalzen - sind aufgrund der oben erläuterten Umstände nur schwer zu kombinieren.

Daher liegt der Erfindung die Aufgabe zugrunde, diesbezüglich Abhilfe zu schaffen und ein kombiniertes Gießwalzverfahren und eine zugehörige Vorrichtungen zu schaffen, mit dem bzw. mit der sowohl ein kontinuierlicher als auch ein diskontinuierlicher Betrieb möglich ist. Die Vorteile beider Verfahren sollen also nun in einem neuen Anlagenkonzept vereinigt werden.

Die Lösung dieser Ausgabe durch die Erfindung ist verfahrensgemäß dadurch gekennzeichnet, dass die gegossene Dünnbramme zwischen der Gießmaschine und der mindestens einen Walzstraße sowohl mindestens einen Halteofen als auch mindestens einen Induktionsofen passiert, wobei der Halteofen und der Induktionsofen in Abhängigkeit einer gewählten Betriebsart, nämlich einer ersten Betriebsart der kontinuierlichen Herstellung des Metallbandes und einer zweiten Betriebsart der diskontinuierlichen Herstellung des Metallbandes, aktiviert oder deaktiviert bzw. gesteuert oder geregelt wird. Die Reihenfolge der beiden Öfen, also des Halteofens und des Induktionsofens, ist dabei beliebig.

Bevorzugt kann das gewalzte Metallband auch in Bandförderrichtung hinter einer ersten Walzstraße in mindestens einem weiteren Induktionsofen erwärmt werden, wobei der mindestens eine weitere Induktionsofen in Abhängigkeit der gewählten Betriebsart aktiviert oder deaktiviert bzw. gesteuert oder geregelt wird.

Die Wahl der Betriebsart kann dabei in Abhängigkeit der zu erzeugenden Enddicke des Metallbandes oder in Abhängigkeit der Gießgeschwindigkeit des Metallbandes erfolgen. Bewährt hat es sich auch, wenn vorgesehen wird, dass die Wahl der Betriebsart in Abhängigkeit des Produkts aus zu erzeugender Dicke und Geschwindigkeit des Metallbandes bzw. der Dünnbramme erfolgt.

Die Betriebsart kann weiterhin in Abhängigkeit des zu verarbeitenden Materials gewählt werden. Dies kann auch mit der jeweils zulässigen Auslauftemperatur des Bandes aus dem Walzwerk in Zusammenhang stehen.

Beispielsweise kann der Endlosmodus gewählt werden, wenn das Produkt aus Gießdicke und Gießgeschwindigkeit über 70 mm x 6,5 m/min = 455.000 mm²/min liegt. Dieser Wert kann natürlich in Abhängigkeit des Materials auch in einem anderen Bereich liegen, wobei für das Produkt bevorzugt ein Wert zwischen 300.000 mm²/min und 600.000 mm²/min als Kriterium für den "Umschaltpunkt" vom einen auf den anderen Modus herangezogen werden kann.

Ein alternatives Kriterium kann sein, dass der genannte Modus für Enddicken des Metallbandes von weniger als 2 mm gewählt wird.

Bevorzugt wird bei der gewählten Betriebsart der diskontinuierlichen Herstellung des Metallbandes die Dünnbramme chargenweise in dem Halteofen auf einer gewünschten Temperatur gehalten wird, bevor sie in die Walzstraße gefördert wird.

Bei der gewählten Betriebsart der kontinuierlichen Herstellung des Metallbandes kann die Dünnbramme in dem Halteofen auf eine gewünschte Temperatur gebracht und anschließend unmittelbar vor dem Walzvorgang in der Walzstraße mittels des Induktionsofens auf die gewünschte Walztemperatur erwärmt werden. Dabei kann besonders bevorzugt vorgesehen werden, dass der Wärmeeintrag in die Dünnbramme durch den Induktionsofen in Abhängigkeit der Gießgeschwindigkeit erfolgt.

Abhängig von der Gießgeschwindigkeit kann der Endlosmode oder das diskontinuierliche Walzen eingestellt werden, so dass in jedem Betriebsfall die notwendige Endwalztemperatur erreicht werden kann.

Um einen optimalen Energieeinsatz bei der Herstellung des Metallbandes zu erreichen, sieht eine Weiterbildung vor, dass die Abgabe von Wärme von dem erwärmten Metallband bzw. von der Dünnbramme an die Umgebung durch Wärmedämmmittel behindert wird. Diese müssen nicht ständig eingesetzt werden. Daher kann vorgesehen werden, dass zumindest ein Teil der Wärmedämmmittel in Abhängigkeit des gewünschten Betriebsmodus der Gießwalzanlage in den Bereich des Metallbandes hineingefahren oder aus diesem Bereich herausgefahren werden.

Eine vorteilhafte Weiterbildung sieht vor, dass das Metallband in der Walzstraße in einem in Bandförderrichtung vorderen Bereich der Walzstraße entzundert und im Anschluss daran in einem sich in Bandförderrichtung anschließenden Bereich erwärmt wird. Dies schließt freilich das Vorsehen weiterer Entzundereinrichtungen nicht aus.

Das Entzundern des Metallbandes bzw. der Dünnbramme mittels einer Entzundereinrichtung und das Erwärmen des Metallbandes bzw. der Dünnbramme mittels eines Induktionsofens erfolgt dabei bevorzugt zwischen zwei Walzgerüsten. Dabei kann das Erwärmen in Bandförderrichtung auf das Entzundern folgen oder auch umgekehrt.

Die Vorrichtung zum Herstellen eines Metallbandes durch Gießwalzen, mit einer Gießmaschine, in der zunächst eine Dünnbramme gegossen wird, und mindestens einer der Gießmaschine nachgeschalteten Walzstraße, in der die Dünnbramme unter Nutzung der Primärhitze des Gießvorgangs gewalzt wird, zeichnet sich erfindungsgemäß dadurch aus, dass zwischen der Gießmaschine und der mindestens einen Walzstraße mindestens ein Halteofen und mindestens ein Induktionsofen angeordnet ist.

Die entsprechende Steuerung beider Öfen, also des Halteofens und des Induktionsofens, erlaubt - wie noch detailliert zu sehen sein wird - sowohl einen effizienten kontinuierlichen als auch einen effizienten diskontinuierlichen Betrieb der Anlage. Hierfür sind bevorzugt Steuerungsmittel vorhanden, mit denen in Abhängigkeit der gewählten Betriebsart, nämlich einer ersten Betriebsart der kontinuierlichen Herstellung des Metallbandes und einer zweiten Betriebsart der diskontinuierlichen Herstellung des Metallbandes, der Halteofen und/oder der Induktionsofen aktiviert oder deaktiviert bzw. gesteuert oder geregelt wird.

In Förderrichtung der Dünnbramme bzw. des Metallbandes kann zunächst ein Halteofen und dann ein Induktionsofen angeordnet sein. Ferner kann eine Vorstraße und eine Fertigstraße vorgesehen sein, wobei zwischen der Vorstraße und der Fertigstraße ein weiterer Induktionsofen angeordnet ist. Ferner kann mindestens ein weiterer Induktionsofen zwischen zwei Walzgerüsten der Vorstraße und/oder der Fertigstraße angeordnet sein.

Hinter dem in Förderrichtung der Dünnbramme bzw. des Metallbandes ersten Induktionsofen und vor der Fertigstraße kann mit Vorteil eine Bandschere angeordnet werden. Zusätzlich hierzu kann in an sich bekannter Weise in Förderrichtung hinter der Gießmaschine und vor dem Halteofen eine Dünnbrammenschere angeordnet sein. In Förderrichtung hinter der Fertigstraße kann eine Bandschere angeordnet sein.

Eine Weiterbildung sieht vor, dass Wärmedämmmittel zur Behinderung der Abgabe von Wärme von dem erwärmten Metallband bzw. von der erwärmten Dünnbramme an die Umgebung vorhanden sind, die zumindest zeitweise im Bereich des Metallbandes angeordnet sind. Dabei sind bevorzugt Bewegungsmittel vorhanden, mit denen zumindest ein Teil der Wärmedämmmittel in den Bereich des Metallbandes hineingefahren oder aus diesem Bereich herausgefahren werden können.

Zumeist wird allerdings der größte Teil der Wärmedämmmittel ortsfest angeordnet sein.

Weiterhin kann vorgesehen werden, dass mindestens eine Entzundereinrichtung vorhanden ist, die in einem in Bandförderrichtung vorderen Bereich der Walzstraße angeordnet ist.

Eine besonders bevorzugte Ausgestaltung der Erfindung sieht vor, dass in Förderrichtung der Dünnbramme bzw. des Metallbandes in dieser Reihenfolge ein Halteofen, ein Induktionsofen und ein Ausgleichsofen vor der Walzstraße angeordnet sind.

Durch Einsatz von effizienteren induktiven Heizungen, die heute relativ Platz sparend bauen und durch eine geeignete Anlagenkonstellation, die einen Endlosbetrieb aber auch wahlweise ein diskontinuierliches Walzen erlauben, wird die vorgeschlagene Verfahrensweise begünstigt.

Die Vorteile der Endlostechnik, d. h. des kontinuierlichen Betriebs der vorgeschlagenen Anlage, im Zusammenhang mit der CSP-Technologie liegen in folgenden Merkmalen:
Es ergibt sich eine kurze Baulänge der Anlage und damit geringe Investitionskosten.

Es ist eine Energieeinsparung infolge des konsequenten Direkteinsatzes möglich.

Weiter ergibt sich eine geringere Umformfestigkeit infolge der niedrigeren Walzgeschwindigkeit.

Die Möglichkeit wird geschaffen, schwierig zu walzende Produkte und z. B. sehr dünne (ultra dünne) Bänder (Banddicke von ca. 0,8 mm) in hohen Produktionsmengen herzustellen.

Es können Sondermaterialien (hochfeste Materialien) verarbeitet werden.

Es kann eine Kombination von breiten und dünnen Bändern verarbeitet werden.

Bandendenverwalzungen und damit Walzenbeschädigungen können vermieden bzw. vermindert werden.

Die Störrate der Anlage kann verringert und Hochgeher können vermieden werden.

In der Zeichnung sind Ausführungsbeispiele der Erfindung dargestellt.

Es zeigen:
- Fig. 1: schematisch eine Gießwalzanlage gemäß einer ersten Ausführungsform der Erfindung,
- Fig. 2: in der Darstellung nach Fig. 1 eine Gießwalzanlage in einer alternativen Ausführungsform der Erfindung,
- Fig. 3: in der Darstellung nach Fig. 1 eine Gießwalzanlage in einer weiteren alternativen Ausführungsform der Erfindung,
- Fig. 4: schematisch den Bereich zwischen der Gießmaschine und der Walzstraße mit einer Schere und Mitteln zur Wärmedämmung,
- Fig. 5: schematisch den Ausschnitt aus der Fertigstraße mit zwei Walzgerüsten und einer Entzundereinrichtung sowie einem Induktionsofen zwischen diesen und
- Fig. 6: in der Darstellung nach Fig. 1 eine Gießwalzanlage in einer weiteren alternativen Ausführungsform der Erfindung.

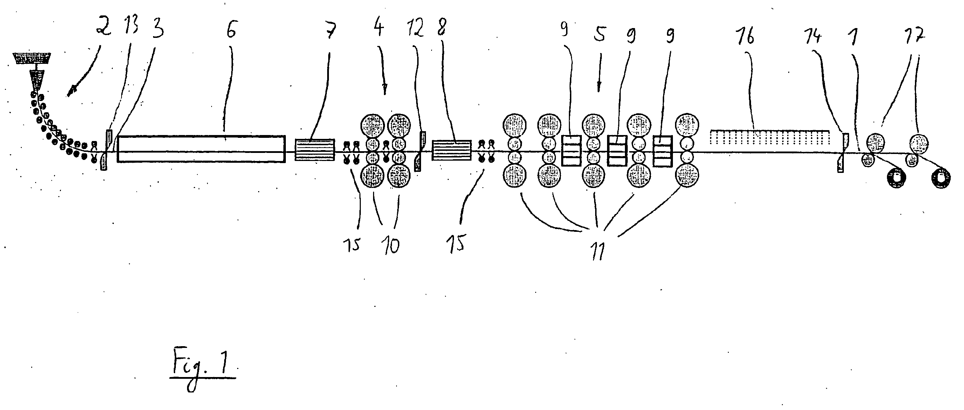

In Fig. 1 ist eine Gießwalzanlage zu sehen, in der ein Metallband 1 hergestellt wird. Hierfür wird zunächst in einer an sich bekannten Gießmaschine 2 eine Dünnbramme 3 gegossen, die dann einer Walzstraße 4, 5 zugeführt wird, die vorliegend aus einer Vorstraße 4 und einer Fertigstraße 5 besteht.

Um sowohl einen kontinuierlichen als auch einen diskontinuierlichen Betrieb im Sinne der obigen Ausführungen zu ermöglichen, ist vor der Walzstraße 4, 5 sowohl ein Halteofen 6 als auch ein Induktionsofen 7 vorgesehen. Der Betrieb der beiden Öfen 6, 7 erfolgt von einer entsprechenden (nicht dargestellten) Steuerung derart, dass für beide Betriebsarten die richtigen Bandtemperaturen vorliegen. Die hierfür benötigten Steuerungs- bzw. Regelungsvorgänge sind im Stand der Technik hinlänglich bekannt.

Der hinter der Gießanlage 2 angeordnete Halteofen 6 kann ein konventionell gasbefeuerter Ofen sein. Die Reihenfolge der Anordnung von Halteofen 6 und Induktionsofen 7 kann beliebig ausgeführt sein.

Gemäß dem Ausführungsbeispiel nach Fig. 1 weist die Vorstraße 4 zwei Walzgerüste 10 auf, während die Fertigstraße 5 fünf Walzgerüste 11 hat. Zu erkennen ist ferner, dass auch zwischen der Vorstraße 4 und der Fertigstraße 5 ein weiterer Induktionsofen 8 angeordnet ist, um das Band nach dem Vorwalzen in der Vorstraße 4 auf die optimale Bandtemperatur vor dem Fertigwalzen in der Fertigstraße 5 aufzuheizen. Weiterhin sind im Ausführungsbeispiel gemäß Fig. 1 auch zwischen einigen Walzgerüsten 11 der Fertigstraße 5 Induktionsöfen 9 angeordnet, um das Band weiterhin optimal temperaturgeführt zu halten.

Zwischen der Gießanlage 2 und dem Halteofen 6 ist eine Bandschere 13 angeordnet. Weiterhin ist eine Bandschere 14 auch hinter der Fertigstraße 5 positioniert. Neu ist, dass in Förderrichtung der Dünnbramme 3 bzw. des Metallbandes 1 hinter dem ersten Induktionsofen 7 und vor der Fertigstraße 5 eine weitere Bandschere 12 angeordnet ist.

Die Schere 13 wird zum Trennen der Dünnbrammen 3 beim diskontinuierlichen Betrieb und die Schere 14 zum Trennen der Bänder beim Endloswalzen verwendet.

Die Schere 12 dient zum Schopfen des Bandkopfes oder Bandendes beim Anfahren oder Ausfördem im Endlosbetrieb oder im diskontinuierlichen Betrieb, um einen sicheren Transport durch die dahinter angeordneten aktiven induktiven Heizungen zu gewährleisten.

Die Anlage ist weiterhin mit an sich bekannten Elementen ausgestattet. Zu nennen sind Entzundereinrichtungen 15, die an prozesstechnisch günstiger Stelle positioniert werden. Ferner ist hinter der Fertigstraße 5 eine Kühlstrecke 16 vorhanden. Gleichermaßen sind Haspeln 17 am Ende der Anlage angeordnet.

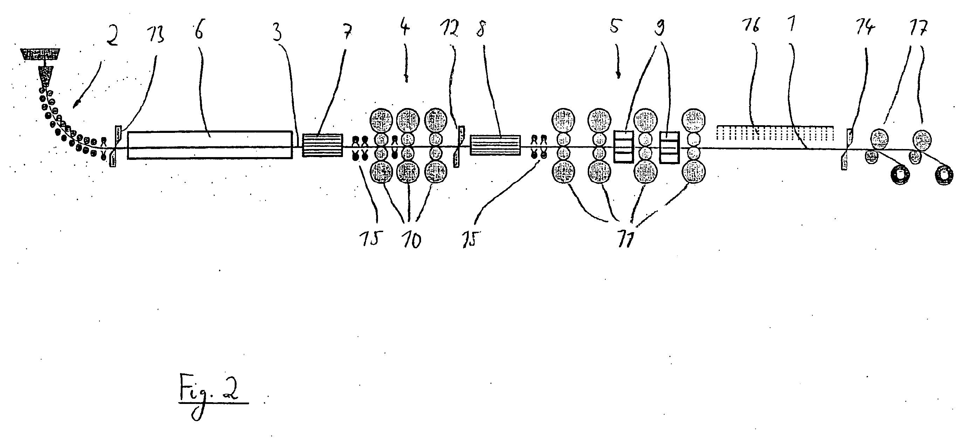

In Fig. 2 ist ein Anlagenkonzept zu sehen, das eine Vorstraße 4 mit drei Walzgerüsten 10 und eine Fertigstraße 5 mit vier Walzgerüsten 11 vorsieht. Ansonsten entspricht die dort dargestellte Lösung derjenigen gemäß Fig. 1.

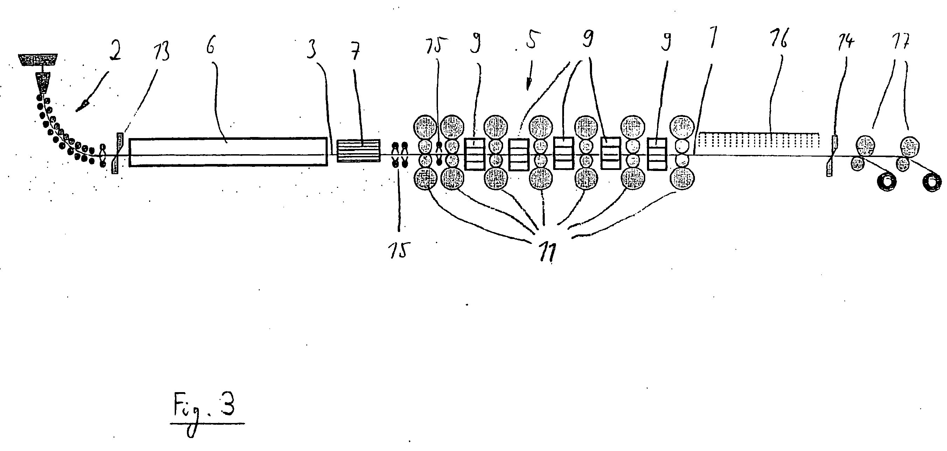

Fig. 3 zeigt eine Anlage mit einer Kompakt-Fertigstraße, d. h. hier existiert nicht die Vorstraße 4 im Sinne der Lösungen gemäß der Figuren 1 und 2. Die Kompakt-Fertigstraße 5 weist vorliegend sieben Walzgerüste 11 auf, die das Metallband 1 im Anschluss an den Induktionsofen 7 Fertigwalzen. Zwischen den Fertiggerüsten sind weitere induktive Heizeinheiten 9 vorgesehen.

Durch Einsatz der vorgeschlagen Anlagentypen ist ein gekoppelter voll- kontinuierlicher Gieß-Walz-Prozess (Endloswalzen) und wahlweise ein entkoppelter diskontinuierlicher Einsatz von Einzelbrammen (Batch-rolling) möglich.

Der Ofen 6 - bevorzugt ausgeführt als Rollenherdofen - dient als Halteofen beim diskontinuierlichen Betrieb und ist vorteilhafter Weise kurz ausgeführt, so dass eine Dünnbramme 3 darin Platz findet. Hierdurch wird die Abkühlung der Dünnbramme beim Transport mit Gießgeschwindigkeit verhindert. Mit der induktiven Heizung 7 wird beim Endlosbetrieb (kontinuierlicher Betrieb) oder diskontinuierlichen Betrieb die Dünnbramme 3 nachgeheizt. Dabei kann der Wärmeeintrag abhängig von der Gießgeschwindigkeit individuell eingestellt werden, so dass sich beim Verlassen der Dünnbramme 3 aus der induktiven Heizung 7 eine konstante Temperatur auf dem gewünschten Niveau ergibt. Ein weiterer Vorteil der induktiven Heizung 7 im Vergleich zu einem gasbefeuerten Ofen ergibt sich aus der kurzen Baulänge bei entsprechend hoher Heizleistung.

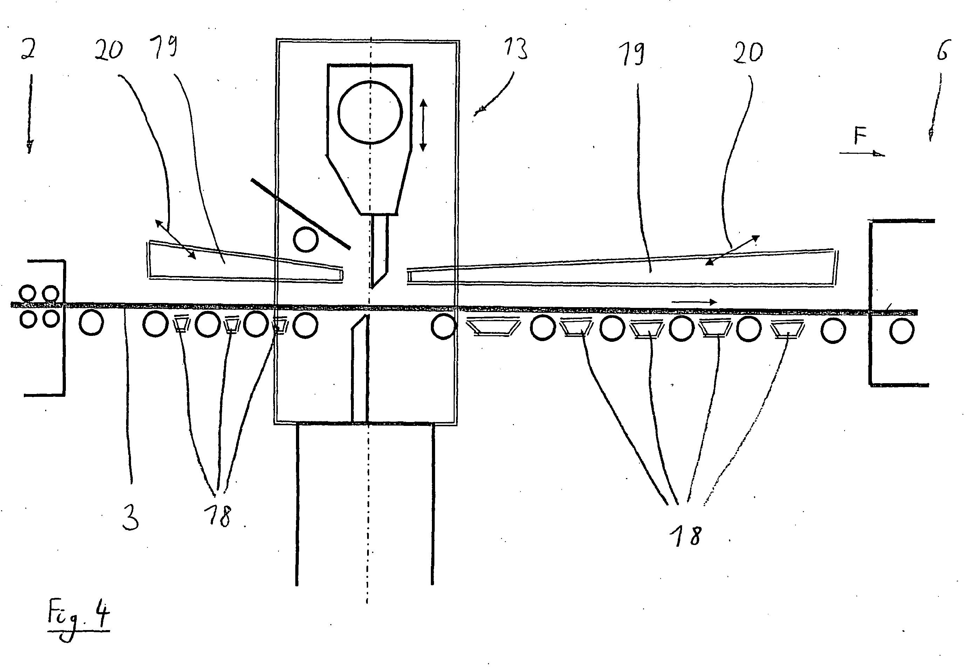

In Fig. 4 ist schematisch der Bereich zwischen der Gießmaschine 2 und der Walzstraße bzw. dem Halteofen 6 zu sehen, der mit der Schere 13 versehen ist. Besonders beim Endlosbetrieb, bei dem mit der niedrigen Gießgeschwindigkeit gewalzt wird, ist es wichtig, die Wärmeverluste zu minimieren. Hierzu ist im Ausführungsbeispiel zwischen der Gießmaschine 2 und dem Ofen 6 im Bereich der Schere 13 (sowie vor und hinter der Induktionsheizung) der Rollgang mit Wärmedämmmitteln 18, 19 versehen. Vorliegend sind diese Mittel als Wärmedämmplatten ausgebildet, die zwischen den Rollen des Rollengangs und oberhalb der Rollgangrollen angeordnet sind. Die Wärmedämmmittel 18 sind dabei ortsfest angeordnet.

Im Bereich, in dem Bewegungsabläufe stattfinden (z. B. im Bereich der Schere 13), ist es nicht üblich, Wärmedämmmittel anzuordnen, da in regelmäßigen zeitlichen Abständen ein Schopfschnitt durchgeführt wird. Beim Endlosbetrieb hingegen sind die Scheren lange Zeit nicht aktiv, so dass es bei dem Ausführungsbeispiel vorgesehen ist, auch den Bereich der Schere dicht neben und unterhalb der Bramme 3 bzw. des Bandes 1 zu isolieren, um die Energiebilanz positiv zu beeinflussen. D. h. die Rollgangsabdeckung ist normalerweise aktiv, nur wenn beabsichtigt wird, einen Schnitt durchzuführen (namentlich beim Gießbeginn oder beim Batch-Walzung), werden die Wärmedämmmittel 19 mittels Bewegungsmitteln 20 (die in Fig. 4 nur sehr schematisch durch einen Doppelpfeil angedeutet sind) aus dem Dämm-Bereich in eine Warteposition bewegt, insbesondere herausgeschwenkt.

Mit der erläuterten Wärmedämmung kann ein Temperaturverlust verhindert werden.

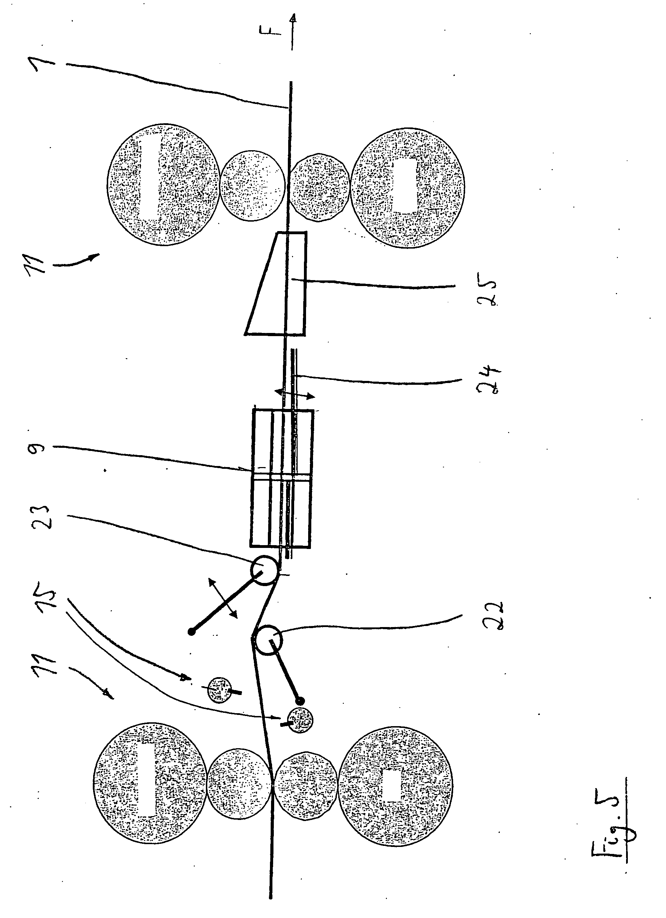

Da der Walzprozess beim Endlosprozess relativ langsam stattfindet, ist es sinnvoll, zwischen den vorderen Walzgerüsten eine Entzunderung der Oberfläche der Bramme 3 bzw. des Bandes 1 durchzuführen und dann das Band zu erwärmen. Das wirkt sich positiv auf die Oberflächenqualität aus. Eine vorrichtungstechnische Ausgestaltung dieser Art geht aus Fig. 5 hervor. Hier ist der Bereich zwischen zwei Walzgerüsten 11 der Fertigstraße 5 zu sehen, wobei in Förderrichtung F des Bandes 1 bzw. der Bramme 3 zunächst eine Entzundereinrichtung 15 angeordnet ist. Ein Looper 22 und eine Niederhalterolle 23 halten das Band 1 auf Spannung. Das Band 1 gelangt dann in einen Induktionsofen 9 und dann über einen Überleittisch 24 und eine Seitenführung 25 zum nachfolgenden Walzgerüst 11. Die Reihenfolge der Walzgerüste, Öfen und Entzundereinrichtungen kann auch in anderer Weise beliebig kombiniert werden.

Wie vorstehend erläutert, kann vorgesehen werden, dass ein Halteofen und ein Induktionsofen hintereinander angeordnet sind, wobei allerdings die Reihenfolge beliebig sein kann. Namentlich kann die Induktionsheizung auch vor dem Halteofen angeordnet sein.

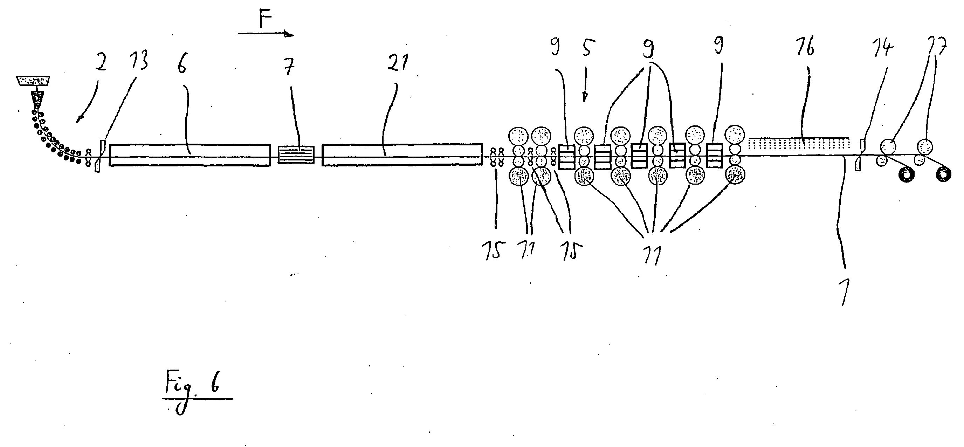

Weiterhin ist es möglich, hinter einem ersten Ofen in Form eines Halteofens 6 und einem sich in Förderrichtung F anschließenden Induktionsofen 7 noch einen Ausgleichsofen 21 anzuordnen, wie es aus Fig. 6 hervorgeht.

Besonders bei der Erzeugung einer besonders hohen Temperatur am Eingang der Fertigstraße, die für z. B. komorientierten Siliziumstahl notwendig sein kann, ist dies von Vorteil. Hier ist der erste Ofen 6 ein Heizofen, der von dem Induktionsofen 7 unterstützt wird. Zum Zwecke der Homogenisierung der Temperaturverteilung über der Bandbreite und -dicke ist der Ausgleichsofen 21 von Vorteil. Diese Ofenkonfiguration gilt bevorzugt für den erläuterten Prozess, sie kann jedoch auch in einer konventionellen CSP-Anlage, d. h. im Batch-Betrieb, angewendet werden.

Beim Endloswalzen bestimmt das Niveau der Gießgeschwindigkeit den Temperaturverlauf durch die gesamte Anlage. Abhängig von der Gießgeschwindigkeit steuert ein Rechenmodell dynamisch die Heizleistungen der induktiven Heizungen vor und innerhalb der Walzstraße in der Art, dass die Walzstraßen-Auslauftem-peratur die Zieltemperatur erreicht.

Unterschreitet die Gießgeschwindigkeit einen bestimmten vorgegebenen Schwellenwert (bei Problemen in der Gießanlage, bei schwierig zu gießenden Materialien, beim Anfahrvorgang etc.), so wird automatisch vom Endlosmode zum diskontinuierlichen Walzen umgeschaltet.

D.h. die Dünnbramme 3 wird mit der Schere 13 getrennt und die Walzgeschwindigkeit so erhöht, dass die gewünschte Endwalztemperatur erreicht wird. Dabei werden die Brammen- bzw. Bandsegmente innerhalb der Straße 4, 5 verfolgt und dynamisch abhängig von der Temperaturverteilung die Transport- bzw. Walzgeschwindigkeit und induktiven Heizleistungen über der Bandlänge angepasst.

Hat sich der Gießprozess wieder stabilisiert und die Gießgeschwindigkeit übersteigt den vorgegebenen Mindestwert, dann wird analog vom diskontinuierlichen Betrieb wieder zurück in den Endlosmode geschaltet.

Beim Endloswalzen werden in der Regel die induktiven Heizungen 9 innerhalb der Fertigstraße 5 eingesetzt, beim diskontinuierlichen Betrieb oder beim Anfahrvorgang am Bandkopf stehen sie in sicherer Warteposition weit entfernt über oder neben dem Band.

Durch ein beliebiges Umschalten bzw. Einstellen von Endlosbetrieb oder diskontinuierlichem Betrieb ist ein hohes Maß an Flexibilität gegeben, die eine Erhöhung der Prozesssicherheit darstellt. Dies gilt insbesondere bei einer Inbetriebnahme einer Produktionsanlage.

Der Endlosmodus bei der Verarbeitung wird nicht generell eingesetzt werden; der Batch-Betrieb wird primär bei Gießgeschwindigkeitsproblemen oder beim Anfahrvorgang genutzt werden.

Zwecks Energieoptimierung kann vorgesehen werden, vornehmlich dünnere oder schwierig zu erzeugende Bänder im Endlosmode und Bänder mit Dicken größer als eine kritische Dicke im Batch-Betrieb bei hoher Geschwindigkeit und dabei geringem Heizenergiebedarf zu walzen. Die richtige Kombination der Erzeugungsart optimiert die Energiebilanz der CSP-Endlos-Batch-Anlage für den gesamten Produktmix.

### Bezugszeichenliste:

- 1: Metallband
- 2: Gießmaschine
- 3: Dünnbramme
- 4, 5: Walzstraße
- 4: Vorstraße
- 5: Fertigstraße
- 6: Halteofen (Rollenherdofen)
- 7: Induktionsofen
- 8: Induktionsofen
- 9: Induktionsofen
- 10: Walzgerüst der Vorstraße
- 11: Walzgerüst der Fertigstraße
- 12: Bandschere
- 13: Bandschere
- 14: Bandschere
- 15: Entzundereinrichtung
- 16: Kühlstrecke
- 17: Haspel
- 18: Wärmedämmmittel
- 19: Wärmedämmmittel
- 20: Bewegungsmittel
- 21: Ausgleichsofen
- 22: Looper
- 23: Niederhalterolle
- 24: Überleittisch
- 25: Seitenführung

- F: Bandförderrichtung

## Patentansprüche

1. Verfahren zum Herstellen eines Metallbandes (1) durch Gießwalzen, bei dem zunächst in einer Gießmaschine (2) eine Dünnbramme (3) gegossen wird, wobei diese anschließend in mindestens einer Walzstraße (4, 5) unter Nutzung der Primärhitze des Gießvorgangs gewalzt wird, wobei die gegossene Dünnbramme (3) zwischen der Gießmaschine (2) und der mindestens einen Walzstraße (4, 5) sowohl mindestens einen Halteofen (6) als auch mindestens einen Induktionsofen (7) passiert, **dadurch gekennzeichnet, dass** der Halteofen (6) und der Induktionsofen (7) in Abhängigkeit einer gewählten Betriebsart, nämlich einer ersten Betriebsart der kontinuierlichen Herstellung des Metallbandes (1) und einer zweiten Betriebsart der diskontinuierlichen Herstellung des Metallbandes (1), aktiviert oder deaktiviert bzw. gesteuert oder geregelt wird.

2. Verfahren nach Anspruch 1,
**dadurch gekennzeichnet,**
**dass** das gewalzte Metallband (1) auch in Bandförderrichtung (F) hinter einer ersten Walzstraße (4) in mindestens einem weiteren Induktionsofen (8, 9) erwärmt wird, wobei der mindestens eine weitere Induktionsofen (8, 9) in Abhängigkeit der gewählten Betriebsart aktiviert oder deaktiviert bzw. gesteuert oder geregelt wird.

3. Verfahren nach Anspruch 1 oder 2,
**dadurch gekennzeichnet,**
**dass** die Wahl der Betriebsart in Abhängigkeit der zu erzeugenden Enddicke des Metallbandes (1) erfolgt.

4. Verfahren nach einem der Ansprüche 1 bis 3,
**dadurch gekennzeichnet,**
**dass** die Wahl der Betriebsart in Abhängigkeit der Gießgeschwindigkeit der Dünnbramme (3) erfolgt.

5. Verfahren nach Anspruch 1 oder 2,
**dadurch gekennzeichnet,**
**dass** die Wahl der Betriebsart in Abhängigkeit des Produkts aus zu erzeugender Dicke und Geschwindigkeit des Metallbandes (1) bzw. der Dünnbramme (3) erfolgt.

6. Verfahren nach einem der Ansprüche 1 bis 5,
**dadurch gekennzeichnet,**
**dass** bei der gewählten Betriebsart der diskontinuierlichen Herstellung des Metallbandes (1) die Dünnbramme (3) chargenweise in dem Halteofen (6) auf einer gewünschten Temperatur gehalten wird, bevor sie in die Walzstraße (4, 5) gefördert wird.

7. Verfahren nach einem der Ansprüche 1 bis 5,
**dadurch gekennzeichnet,**
**dass** bei der gewählten Betriebsart der kontinuierlichen Herstellung des Metallbandes (1) die Dünnbramme (3) in dem Halteofen (6) auf eine gewünschte Temperatur gebracht und anschließend unmittelbar vor dem Walzvorgang in der Walzstraße (4, 5) mittels des mindestens einen Induktionsofens (7, 8, 9) auf die gewünschte Walztemperatur erwärmt wird.

8. Verfahren nach Anspruch 7,
**dadurch gekennzeichnet,**
**dass** der Wärmeeintrag in die Dünnbramme (3) durch den mindestens einen Induktionsofen (7, 8, 9) in Abhängigkeit der Gießgeschwindigkeit sowie Austrittstemperatur aus der Gießmaschine (2) bzw. Halteofen (6) erfolgt.

9. Verfahren nach einem der Ansprüche 1 bis 8,
**dadurch gekennzeichnet,**
**dass** die Abgabe von Wärme von dem erwärmten Metallband (1) bzw. von der erwärmten Dünnbramme (3) an die Umgebung durch Wärmedämmmittel (18, 19) behindert wird.

10. Verfahren nach Anspruch 9,
**dadurch gekennzeichnet,**
**dass** zumindest ein Teil der Wärmedämmmittel (18, 19) in Abhängigkeit des gewünschten Betriebsmodus der Gießwalzanlage in den Bereich des Metallbandes (1) bzw. der Dünnbramme (3) hineingefahren oder aus diesem Bereich herausgefahren werden.

11. Verfahren nach einem der Ansprüche 1 bis 10,
**dadurch gekennzeichnet,**
**dass** das Metallband (1) bzw. die Dünnbramme (3) in der Walzstraße (4, 5) in einem in Bandförderrichtung (F) vorderen Bereich der Walzstraße (4, 5) entzundert und im Anschluss daran in einem sich in Bandförderrichtung (F) anschließenden Bereich erwärmt wird.

12. Verfahren nach Anspruch 11,
**dadurch gekennzeichnet,**
**dass** das Entzundern des Metallbandes (1) bzw. der Dünnbramme (3) mittels einer Entzundereinrichtung (15) und das Erwärmen des Metallbandes (1) bzw. der Dünnbramme (3) mittels eines Induktionsofens (8, 9) zwischen zwei Walzgerüsten (10, 11) erfolgt.

13. Verfahren nach Anspruch 12,
**dadurch gekennzeichnet,**
**dass** das Erwärmen in Bandförderrichtung (F) auf das Entzundern folgt.

14. Verfahren nach Anspruch 12,
**dadurch gekennzeichnet,**
**dass** das Entzundern in Bandförderrichtung (F) auf das Erwärmen folgt.

15. Vorrichtung zum Herstellen eines Metallbandes (1) durch Gießwalzen, mit einer Gießmaschine (2), in der zunächst eine Dünnbramme (3) gegossen wird, und mindestens einer der Gießmaschine (2) nachgeschalteten Walzstraße (4, 5), in der die Dünnbramme (3) unter Nutzung der Primärhitze des Gießvorgangs gewalzt wird, insbesondere zur Durchführung des Verfahrens nach einem der Ansprüche 1 bis 14, wobei zwischen der Gießmaschine (2) und der mindestens einen Walzstraße (4, 5) mindestens ein Halteofen (6) und mindestens ein Induktionsofen (7) angeordnet ist, **dadurch gekennzeichnet, dass** Steuerungsmittel vorhanden sind, mit denen in Abhängigkeit einer gewählten Betriebsart, nämlich einer ersten Betriebsart der kontinuierlichen Herstellung des Metallbandes (1) und einer zweiten Betriebsart der diskontinuierlichen Herstellung des Metallbandes (1), der Halteofen (6) und/oder der Induktionsofen (7) aktiviert oder deaktiviert bzw. gesteuert oder geregelt wird.

16. Vorrichtung nach Anspruch 15,
**dadurch gekennzeichnet,**
**dass** in Förderrichtung (F) der Dünnbramme (3) bzw. des Metallbandes (1) zunächst ein Halteofen (6) und dann ein Induktionsofen (7) angeordnet ist.

17. Vorrichtung nach Anspruch 15,
**dadurch gekennzeichnet,**
**dass** in Förderrichtung (F) der Dünnbramme (3) bzw. des Metallbandes (1) zunächst ein Induktionsofen (7) und dann ein Halteofen (6) angeordnet ist.

18. Vorrichtung nach einem der Ansprüche 15 bis 17,
**dadurch gekennzeichnet,**
**dass** eine Vorstraße (4) und eine Fertigstraße (5) vorgesehen ist, wobei zwischen der Vorstraße (4) und der Fertigstraße (5) mindestens ein weiterer Induktionsofen (8) angeordnet ist.

19. Vorrichtung nach einem der Ansprüche 15 bis 18,
**dadurch gekennzeichnet,**
**dass** mindestens ein weiterer Induktionsofen (9) zwischen zwei Walzgerüsten (10, 11) der Vorstraße (4) und/oder der Fertigstraße (5) angeordnet ist.

20. Vorrichtung nach einem der Ansprüche 15 bis 19,
**dadurch gekennzeichnet,**
**dass** hinter dem in Förderrichtung der Dünnbramme (3) bzw. des Metallbandes (1) ersten Induktionsofen (7) und vor der Fertigstraße (5) eine Bandschere (12) angeordnet ist.

21. Vorrichtung nach einem der Ansprüche 15 bis 20,
**dadurch gekennzeichnet,**
**dass** in Förderrichtung der Dünnbramme (3) bzw. des Metallbandes (1) hinter der Gießmaschine (2) und vor dem Halteofen (6) eine Bandschere (13) angeordnet ist; die vornehmlich bei diskontinuierlichen Walzprozess zum Einsatz kommt.

22. Vorrichtung nach einem der Ansprüche 15 bis 21,
**dadurch gekennzeichnet,**
**dass** in Förderrichtung der Dünnbramme (3) bzw. des Metallbandes (1) hinter der Fertigstraße (5) eine Bandschere (14) angeordnet ist, die zum Trennen der Metallbänder beim Endlosmode verwendet wird.

23. Vorrichtung nach einem der Ansprüche 15 bis 22,
**dadurch gekennzeichnet,**
**dass** Wärmedämmmittel (18, 19) zur Behinderung der Abgabe von Wärme von dem erwärmten Metallband (1) bzw. von der Dünnbramme (3) an die Umgebung vorhanden sind, die zumindest zeitweise im Bereich des Metallbandes (1) angeordnet sind.

24. Vorrichtung nach Anspruch 23,
**dadurch gekennzeichnet,**
**dass** Bewegungsmittel (20) vorhanden sind, mit denen zumindest ein Teil der Wärmedämmmittel (18, 19) in den Bereich des Metallbandes (1) bzw. der Dünnbramme (3) hineingefahren oder aus diesem Bereich herausgefahren werden können.

25. Vorrichtung nach einem der Ansprüche 15 bis 24,
**dadurch gekennzeichnet,**
**dass** mindestens eine Entzundereinrichtung (15) vorhanden ist, die in einem in Bandförderrichtung (F) vorderen Bereich der Walzstraße (4, 5) angeordnet ist.

26. Vorrichtung nach einem der Ansprüche 15 bis 25,
**dadurch gekennzeichnet,**
**dass** in Förderrichtung (F) der Dünnbramme (3) bzw. des Metallbandes (1) in dieser Reihenfolge ein Halteofen (6), ein Induktionsofen (7) und ein Ausgleichsofen (21) vor der Walzstraße (4, 5) angeordnet sind.

## Claims

1. Method of producing a metal strip (1) by casting-rolling, in which initially a thin slab (3) is cast in a casting machine (2), wherein this is subsequently rolled in at least one rolling train (4, 5) with use of the primary heat of the casting process, wherein the cast thin slab (3) passes, between the casting machine (2) and the at least one rolling train (4, 5), not only at least one holding oven (6), but also at least one induction oven (7), **characterised in that** the holding oven (6) and the induction oven (7) are activated or deactivated or controlled or regulated in dependence on a selected mode of operation, namely a first mode of operation of continuous production of the metal strip (1) and a second mode of operation of discontinuous production of the metal strip (1).

2. Method according to claim 1, **characterised in that** the rolled metal strip (1) is also heated in strip conveying direction (F) behind a first rolling train (4) in at least one further induction oven (8, 9), wherein the at least one further induction oven (8, 9) is activated or deactivated or controlled or regulated in dependence on the selected operating mode.

3. Method according to claim 1 or 2, **characterised in that** the selection of the operating mode is carried out in dependence on the final thickness, which is to be produced, of the metal strip (1).

4. Method according to any one of claims 1 to 3, **characterised in that** the selection of the operating mode is carried out in dependence on the casting speed of the thin slab (3).

5. Method according to claim 1 or 2, **characterised in that** the selection of the operating mode is carried out in dependence on the product of thickness, which is to be produced, and speed of the metal strip (1) or of the thin slab (3).

6. Method according to any one of claims 1 to 5, **characterised in that** in the case of the selected operating mode of discontinuous production of the metal strip (1) the thin slab (3) is kept, charge-by-charge, in the holding oven (6) at a desired temperature before it is conveyed to the rolling train (4, 5).

7. Method according to any one of claims 1 to 5, **characterised in that** in the case of the selected mode of operation of continuous production of the metal strip (1) the thin slab (3) is brought in the holding oven (6) to a desired temperature and subsequently heated to the desired rolling temperature by means of the at least one induction oven (7, 8, 9) directly prior to the rolling process in the rolling train (4, 5).

8. Method according to claim 7, **characterised in that** the heat intake into the thin slab (3) is carried out by the at least one induction oven (7, 8, 9) in dependence on the casting speed as well as the exit temperature from the casting machine (2) or holding oven (6).

9. Method according to any one of claims 1 to 8, **characterised in that** the delivery of heat from the heating metal strip (1) or from the heated thin slab (3) to the environment is impeded by heat insulating means (18, 19).

10. Method according to claim 9, **characterised in that** at least a part of the heat insulating means (18, 19) is moved, in dependence on the desired mode of operation of the casting-rolling plant, into the region of the metal strip (1) or the thin slab (3) or out of this region.

11. Method according to any one of claims 1 to 10, **characterised in that** the metal strip (1) or the thin slab (3) is descaled in the rolling train (4, 5) in a region, which is at the front in strip conveying direction (F), of the rolling train (4, 5) and subsequently thereto heated in a region adjoining in strip conveying direction (F).

12. Method according to claim 11, **characterised in that** the descaling of the metal strip (1) or of the thin slab (3) is carried out by means of a descaling device (15) and the heating of the metal strip (1) or of the thin slab (3) is carried out by means of an induction oven (8, 9) between two roll stands (10, 11).

13. Method according to claim 12, **characterised in that** the heating follows the descaling in strip conveying direction (F).

14. Method according to claim 12, **characterised in that** the descaling follows the heating in strip conveying direction (F).

15. Device for producing a metal strip (1) by casting-rolling, with a casting machine (2), in which initially a thin slab (3) is cast, and at least one rolling train (4, 5), which is downstream of the casting machine (2), in which the thin slab (3) is rolled with use of the primary heat of the casting process, particularly for carrying out the method according to any one of claims 1 to 14, wherein arranged between the casting machine (2) and the at least one rolling train (4, 5) are at least one holding oven (6) and at least one induction oven (7), **characterised in that** control means are present by which the holding oven (6) and/or the induction oven (7) is or are activated or deactivated or controlled or regulated in dependence on a selected mode of operation, namely a first mode of operation of continuous production of the metal strip (1) and a second mode of operation of discontinuous production of the metal strip (1).

16. Device according to claim 15, **characterised in that** initially a holding oven (6) and then an induction oven (7) are arranged in conveying direction (F) of the thin slab (3) or the metal strip (1).

17. Device according to claim 15, **characterised in that** initially an induction oven (7) and then a holding oven (6) are arranged in conveying direction (F) of the thin slab (3) or the metal strip (1).

18. Device according to any one of claims 15 to 17, **characterised in that** a blooming train (4) and a finishing train (5) are provided, wherein at least one further induction oven (8) is arranged between the blooming train (4) and the finishing train (5).

19. Device according to any one of claim 15 to 18, **characterised in that** at least one further induction oven (9) is arranged between two roll stands (10, 11) of the blooming train (4) and/or of the finishing train (5).

20. Device according to any one of claims 15 to 19, **characterised in that** a strip cutter (12) is arranged behind the induction oven (7), which is first in conveying direction of the thin slab (3) or of the metal strip (1), and ahead of the finishing train (5).

21. Device according to any one of claims 15 to 20, **characterised in that** a strip cutter (13), which is used primarily in a discontinuous rolling process, is arranged behind the casting machine (2) in the conveying direction of the thin slab (3) or of the metal strip (1) and ahead of the holding oven (6).

22. Device according to any one of claims 15 to 21, **characterised in that** a strip cutter (14), which is used for parting the metal strips in the continuous mode, is arranged behind the finishing train (5) in conveying direction of the thin slab (3) or of the metal strip (1).

23. Device according to any one of claims 15 to 22, **characterised in that** heat insulating means (18, 19) for impeding the delivery of heat from the heated metal strip (1) or from the thin slab (3) to the environment are provided and are arranged at least partly in the region of the metal strip (1).

24. Device according to claim 23, **characterised in that** movement means (20) are present, by which at least a part of the heat insulating means (18, 19) can be moved into the region of the metal strip (1) or the thin slab (3) or out of this region.

25. Device according to any one of claims 15 to 24, **characterised in that** at least one descaling device (15) is present, which is arranged in a region of the rolling train (4, 5) at the front in strip conveying direction (F).

26. Device according to any one of claims 15 to 25, **characterised in that** a holding oven (6), an induction oven (7) and a compensating oven (21) are arranged in this sequence in front of the rolling train (4, 5) in conveying direction (F) of the thin slab (3) or the metal strip (1).

## Revendications

1. Procédé pour produire un feuillard métallique (1) par coulée continue et laminage, dans lequel on coule tout d'abord une brame mince (3) dans une machine de coulée (2) et cette brame est ensuite laminée dans au moins un train de laminage (4, 5) en exploitant la chaleur primaire de l'opération de coulée, dans lequel la brame mince coulée (3) passe, entre la machine de coulée (2) et ledit au moins un train de laminage (4, 5) à travers au moins un four de maintien (6) de même qu'à travers au moins un four à induction (7),
**caractérisé en ce que** le four de maintien (6) et le four à induction (7) sont activés ou désactivés, ou respectivement commandés ou régulés en fonction d'un mode d'exploitation choisi, à savoir un premier mode d'exploitation pour production en continu du feuillard métallique (1) et un second mode d'exploitation pour production discontinue du feuillard métallique (1).

2. Procédé selon la revendication 1,
**caractérisé en ce que** le feuillard métallique laminé (1) est également réchauffé dans au moins un autre four à induction (8, 9), derrière un premier train de laminage (4) en direction de convoyage (F) du feuillard, ledit au moins un autre four à induction (8, 9) étant activé ou désactivé, ou respectivement commandé ou régulé en fonction du mode d'exploitation choisi.

3. Procédé selon la revendication 1 ou 2,
**caractérisé en ce que** le choix du mode d'exploitation a lieu en fonction de l'épaisseur finale du feuillard métallique (1) à produire.

4. Procédé selon l'une des revendications 1 à 3,
**caractérisé en ce que** le choix du mode d'exploitation a lieu en fonction de la vitesse de coulée de la brame mince (3).

5. Procédé selon la revendication 1 ou 2,
**caractérisé en ce que** le choix du mode d'exploitation a lieu en fonction du produit de l'épaisseur par la vitesse du feuillard métallique (1) ou respectivement de la brame mince (3) à produire.

6. Procédé selon l'une des revendications 1 à 5,
**caractérisé en ce que** lorsque l'on choisit comme mode d'exploitation la production discontinue du feuillard métallique (1), la brame mince (3) est maintenue par charge dans le four de maintien (6) à une température désirée avant d'être convoyée dans le train de laminage (4, 5).

7. Procédé selon l'une des revendications 1 à 5,
**caractérisé en ce que** lorsque l'on choisit comme mode d'exploitation la production continue du feuillard métallique (1), la brame mince (3) est amenée dans le four de maintien (6) à une température souhaitée et est ensuite réchauffée au moyen dudit au moins un four à induction (7, 8, 9) à la température de laminage désirée immédiatement avant l'opération de laminage dans le train de laminage (4, 5).

8. Procédé selon la revendication 7,
**caractérisé en ce que** l'apport de chaleur dans la brame mince (3) par ledit au moins un four à induction (7, 8, 9) a lieu en fonction de la vitesse de coulée ainsi que de la température de sortie hors de la machine de coulée (2) ou du four de maintien (6).

9. Procédé selon l'une des revendications 1 à 8,
**caractérisé en ce que** l'on empêche la dissipation de chaleur depuis le feuillard métallique réchauffé (1) ou respectivement depuis la brame mince réchauffée (3) vers l'environnement par des moyens d'isolation thermique (18, 19).

10. Procédé selon la revendication 9,
**caractérisé en ce qu'**une partie au moins des moyens d'isolation thermique (18, 19) sont introduits dans la zone du feuillard métallique (1) ou de la brame mince (3) ou extraits hors de cette zone en fonction du mode d'exploitation désiré de l'installation de coulée continue et de laminage.

11. Procédé selon l'une des revendications 1 à 10,
**caractérisé en ce que** le feuillard métallique (1) ou la brame mince (3) dans le train de laminage (4, 5) est décalaminé(e) dans une zone intérieure, en direction de convoyage (F) du feuillard, du train de laminage (4, 5), et est réchauffé(e) à la suite dans une zone successive en direction de convoyage (F) du feuillard.

12. Posséder selon la revendication 11,
**caractérisé en ce que** le décalaminage du feuillard métallique (1) ou de la brame mince (3) a lieu au moyen d'un dispositif de décalaminage (15) et le réchauffement du feuillard métallique (1) ou de la brame mince (3) a lieu au moyen d'un four à induction (8, 9) entre deux cages de laminoir (10, 11).

13. Procédé selon la revendication 12,
**caractérisé en ce que** le réchauffement fait suite au décalaminage dans la direction de convoyage (F) du feuillard.

14. Procédé selon la revendication 12,
**caractérisé en ce que** le décalaminage fait suite au réchauffement dans la direction de convoyage (F) du feuillard.

15. Appareil pour produire un feuillard métallique (1) par coulée continue et laminage, comprenant une machine de coulée (2) dans laquelle est tout d'abord coulée une brame mince (3), et au moins un train de laminage (4, 5) agencée à la suite de la machine de coulée (2) et dans lequel la brame mince (3) est laminée en exploitant la chaleur primaire de l'opération de coulée, en particulier pour la mise en oeuvre du procédé selon l'une des revendications 1 à 14, dans lequel au moins un four de maintien (6) et au moins un four à induction (7) est agencé entre la machine de coulée (2) et ledit au moins un train de laminage (4, 5),
**caractérisé en ce qu'**il est prévu des moyens de commande, au moyen desquels le four de maintien (6) et/ou le four à induction (7) est activé ou désactivé, ou respectivement commandé ou régulé, en fonction d'un mode d'exploitation choisi, à savoir un premier mode d'exploitation pour production en continu du feuillard métallique (1) et un second mode d'exploitation pour production discontinue du feuillard métallique (1).

16. Appareil selon la revendication 15,
**caractérisé en ce que,** dans la direction de convoyage (F) de la brame mince (3) ou du feuillard métallique (1) est agencé tout d'abord un four de maintien (6) et ensuite un four à induction (7).

17. Appareil selon la revendication 15,
**caractérisé en ce que,** dans la direction de convoyage (F) de la brame mince (3) ou du feuillard métallique (1) est agencé tout d'abord un four à induction (7) et ensuite un four de maintien (6).

18. Appareil selon l'une des revendications 15 à 17,
**caractérisé en ce qu'**il est prévu un train dégrossisseur (4) et un train finisseur (5), et **en ce qu'**au moins un autre four à induction (8) est agencé entre le train dégrossisseur (4) et le train finisseur (5).

19. Appareil selon l'une des revendications 15 à 18,
**caractérisé en ce qu'**au moins un autre four à induction (9) est agencé entre deux cages de laminage (10, 11) du train dégrossisseur (4) et/ou du train finisseur (5).

20. Appareil selon l'une des revendications 15 à 19,
**caractérisé en ce qu'**une cisaille de feuillard (12) est agencée derrière le premier four à induction (7) en direction de convoyage de la brame mince (3) ou du feuillard métallique (1) et avant le train finisseur (5).

21. Appareil selon l'une des revendications 15 à 20,
**caractérisé en ce qu'**une cisaille de feuillard (13) est agencée derrière la machine de coulée (2) et avant le four de maintien (6), dans la direction de convoyage de la brame mince (3) ou du feuillard métallique (1), laquelle est utilisée principalement lors du processus de laminage discontinu.

22. Appareil selon l'une des revendications 15 à 21,
**caractérisé en ce qu'**une cisaille de feuillard (14) est agencée derrière le train finisseur (5), en direction de convoyage de la brame mince (3) ou du feuillard métallique (1), laquelle est utilisée pour séparer les feuillards métalliques lors du mode d'exploitation en continu.

23. Appareil selon l'une des revendications 15 à 22,
**caractérisé en ce qu'**il est prévu des moyens d'isolation thermique (18, 19) pour empêcher la dissipation de chaleur depuis le feuillard métallique réchauffé (1) ou depuis la brame mince (3) vers l'environnement, qui sont agencés au moins temporairement dans la région du feuillard métallique (1).

24. Appareil selon la revendication 23,
**caractérisé en ce qu'**il est prévu des moyens de déplacement (20) au moyen desquels au moins une partie des moyens d'isolation thermique (18, 19) est introduite dans la zone du feuillard métallique (1) ou de la brame mince (3), ou extraite hors de cette zone.

25. Appareil selon l'une des revendications 15 à 24,
**caractérisé en ce qu'**il est prévu au moins un dispositif de décalaminage (15) qui est agencé dans une zone antérieure, en direction de convoyage (F) du feuillard, du train de laminage (4, 5).

26. Appareil selon l'une des revendications 15 à 25,
**caractérisé en ce que,** dans la direction de convoyage (F) de la brame mince (3) ou du feuillard métallique (1), sont agencés un four de maintien (6), un four à induction (7) et un four d'égalisation (21) avant le train de laminage (4, 5), dans cette succession.
